# EUROPEAN PATENT APPLICATION

(11) **EP 1 547 680 A1**
(43) Date of publication of application: **29.06.2005**
(21) Application number: 03794250.5
(22) Date of filing: 05.09.2003
(51) Int. Cl.: B01J 19/12, F02M 27/04

(54) **ACTIVATION APPARATUS**

(30) Priority: 06.09.2002 JP 2002261085
(71) Applicant: Itabashi, Kazuko, Fuchu City, Tokyo 183-0055 (JP); Joyearth Corporation, Fuchu City, Tokyo 183-0055 (JP)
(72) Inventor: ITABASHI, Kazuko c/o Joyearth Corporation, Fuchu-city, Tokyo 183-0055 (JP)
(74) Representative: Merrifield, Sarah Elizabeth
(86) International application number: PCT/JP2003/011349
(87) International publication number: WO 2004/022222

(57) **Abstract**

An activation apparatus (1) is **characterized in that** two or more of metals or materials mainly containing metals which have different standard electrode potentials are stacked to thereby generate electric charges, and electromagnetic waves are generated by a potential difference between the stacked metals or materials. For example, a layered body (1B) of a two-layer structure having an outer layer metal plate (4) of titanium and an inner layer metal plate (5) of copper is formed into a tubular shape. The layered body is so fixed around a fuel transport pipe (1b) via a plurality of bolts nuts (6) that the outer layer metal plate (4) and the inner layer metal plate (5) divided into two rainwater gutter-like shapes and comprising flanges (4a), (5a) of a joint portion form a two-layer structure having a predetermined space therebetween. The apparatus does not need a new energy source, and is an easily attachable, simple apparatus. The apparatus efficiently activates a fuel to thereby improve fuel consumption.

## Description

### Technical Field

The present invention relates to an activation apparatus which enhances functions of objects including liquids such as water, oil (including volatile oils such as gasoline), gases such as air, gas, solids such as foods, and mixtures such as human bodies by activation of the objects.

### Background Art

A technique has heretofore been put into practical use in which a magnetic field or an electric charge is applied to fluids such as water and fuel, a cluster of these molecules is decomposed and formed into a fine-grained structure to enhance reactivity, or fluid molecules are ionized to thereby reform them. For example, in a technique described in Japanese Patent Application Laid-Open No. 7-258657, a plurality of magnetic members having predetermined thicknesses are continuously arranged in a direction in which magnetisms repulse each other to thereby generate a predetermined magnetic field, and disposed in a fuel tank. Accordingly, carbon hydride molecules of a fuel are not easily bonded to one another by the magnetic field generated in this manner, and burning efficiency is improved. There is also an effect that water molecules in fuel are formed into the fine-grained structure by a far infrared effect of ceramic disposed between the magnetic members, and vaporization at a spraying time is further satisfactory. On the other hand, in Japanese Patent Application Laid-Open No. 5-50067, a technique has been described in which cathodes and anodes having different electrochemical potentials are mutually separated/arranged in a liquid transport path where a liquid of a water supply system or the like passes. Furthermore, a third electrode is disposed, and metal ions are eluted into a liquid from the electrode. Accordingly, such liquid is reformed, and scum components such as iron oxide scales are removed. Furthermore, in recent years, a large number of water activating units have been sold in which electric charges are imparted to metal ions included in water by magnetic members having magnetic fields and arranged in such a manner as to hold water flow thereamong, utilizing an electromotive force energy (Faraday's law of electromagnetic induction) by an object passing in a right-angle direction with respect to the magnetic field. Moreover, water molecules are arranged and reformed.

In these techniques, the fluid is ionized, or fluid molecules are arranged and reformed utilizing kinetic energy by flow of the object, polarity or magnetic field of the magnetic member, or far infrared effect by far infrared ray generating materials. However, since a flow rate of a fuel flowing through an oil supply tube is remarkably slow, energy is remarkably small, and intensity of the magnetic field by the magnetic member is also small. Therefore, a power applied from the outside in order to obtain an intense magnetic field has been required, and a magnet has been required to be largely strengthened. Therefore, a constitution is complicated, size or weight is excessively large, the constitution is not easily attached to the existing system, or a necessity for stopping the operation for the attaching occurs. The techniques have had low practicability, and have not easily spread.

On the other hand, a product has also been sold which improves blood circulation by a magnetic line effect to recover fatigue, when the magnet generating a predetermined magnetic force line is attached to skin, or used in accessories such as necklace and bracelet. A minus ion generating accessory constituted by threading together noble metal pieces whose outer peripheral surfaces are formed by arranging metals having plus and minus potentials has been disclosed in Japanese Patent Application Laid-Open No. 2001-21885. Energy of an ultraviolet ray or the like by static electricity or sunlight generated by human activity is utilized, electric charges are generated in combination of metals having different potentials, and blood is alkalized by accordingly generated minus ions. Consequently, a blood circulation improving effect or a relaxing effect is expected. This technique is superior as the constitution by the combination of a plurality of metals having different potentials in that the energy is taken from the outside and utilized.

However, since one unit of the magnetic member or the magnetic material is small, and surface area of a portion for taking the energy from the outside is small, generated magnetic field or minus ion amount is small, and it has been difficult to sufficiently reform blood.

### Disclosure of the Invention

An object of the present invention is to solve the above-described problem, and to efficiently activate an object by a simple device which does not require any new energy source and which is easily attached without inhibiting operation of each system. For example, fuel consumption is improved in fuel, absorption in a human body is facilitated without polluting any city water pipe in water, oxidation is prevented in oil, viscosity is lowered to thereby improve circulation in blood, and minus ionization or the like is achieved in air.

According to the present invention, there is provided an activation apparatus wherein two or more types of metals or materials mainly containing metals, having different standard electrode potentials, are stacked upon one another to generate electric charges, and accordingly electromagnetic waves are generated by a potential difference between the stacked metals or materials. Consequently, even with a lightweight and simple constitution, taken energy is large, large potential difference and intense magnetic field are caused, and ions are generated, so that the object can be efficiently activated. Here, in the present invention, it is assumed that the material mainly containing the metal include an organic or inorganic metal compound and a mixture mainly of the metal.

In a preferable mode, at least one of the above-described two or more metals is formed into grains. Consequently, the above-described effect is remarkable. It is to be noted that in the present invention, the stacking includes not only a mutually closely adhering state but also a case where gaps are disposed, and the grained metal is applied, kneaded and rubbed, or interwoven into cloth, thread, paper, plastic or the like, and stacked.

Moreover, at least one of minerals, ceramics, sludge of them, and metal sludge is held between two or more types of metals. Then, an activation apparatus is obtained in which the metals are electrically separated or interposed from one another, the generated magnetic field is adjusted, and a far infrared effect is strengthened. Efficiency of a magnetic force line effect by the magnetic field can be expected, and further activation of an object by the far infrared effect can also be expected.

Furthermore, when the above-described laminate is formed into a plate, band, or sheet shape, an energy take-in area can be broadened, and a function area can be broadened. Additionally, when the laminate is arched, the magnetic force line effect and far infrared effect can be concentrated on a portion surrounded with the laminate. When the laminate is formed into a tubular shape, further the effect can be concentrated on a central portion, and the activation apparatus can be compact and easily attached to the curved face of a tubular member. It is to be noted that examples of the tubular member include small-diameter pipes and beads. These members can be easily connected to one another via threads or the like, and easily attached to a target. Furthermore, when the apparatus is formed into a round shape in the connected state, the effects can be concentrated on a middle portion. Additionally, a reflective member which reflects an electromagnetic wave is disposed on one surface of the laminate, the generated electromagnetic wave is concentrated on one direction or point, and accordingly fluid can be activated more efficiently.

### Brief Description of the Drawings

FIG. 1 shows a front view and a sectional view showing an activation apparatus according to the present invention;
FIG. 2 shows a front view and a sectional view showing a different activation apparatus according to the present invention; and
FIG. 3 shows a front view and a sectional view showing a further different activation apparatus according to the present invention.

### Best Mode for Carrying out the Invention

A best mode for carrying out the present invention will be described hereinafter in detail with reference to the drawings. It is to be noted that even in different embodiments, the same constituting elements are denoted with the same reference numerals, and described.

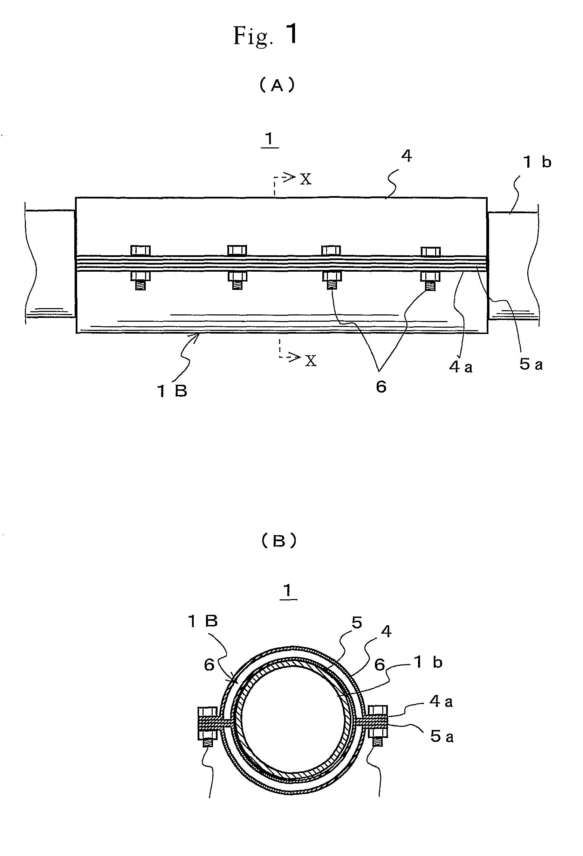

FIG. 1 shows a best mode for carrying out the present invention. The drawing shows an activation apparatus 1, and one example of a fuel activation apparatus attached around a fuel transport pipe 1b connecting a fuel tank to a motor. FIG. 1A is a front view, and B is an X-X line sectional view. The activation apparatus 1 is constituted by forming a layered body 1B into a tubular form, in which two types of metal plates having different potentials are formed into a two-layer structure. For example, an outer-layer metal plate 4 is formed of titanium having a high minus potential, and an inner-layer metal plate 5 is formed of copper having a low minus potential to thereby dispose a potential difference. Each of them is divided into two rainwater gutter-like forms, and has flanges 4a, 5a of a joint portion. The outer-layer metal plate 4 and the inner-layer metal plate 5 are fixed via a plurality of bolts nuts 6 surround the fuel transport pipe 1b in such a manner as to form the two-layer structure having a predetermined space. It is to be noted that the metal plates 4 and 5 may be arranged in contact with each other. It is to be noted that the combination of the metals may be another combination, or a combination of three or more types of metals as long as a desired potential difference is made. Examples of the metal having a high minus potential include Au, Pt, and examples of the metal having a low minus potential (plus potential) include Zr, Al. A resin plate into which oxide, carbide, or powder of them is mixed/kneaded. Moreover, a direction of polarity is freely set depending on the combination, the fluid is not only minus but also plus ionized to thereby gather molecules, and a large molecule can be formed.

The present embodiment has the above-described constitution, a tube structure by the two-layer structure of two types of metals having a potential difference is constituted, a magnetic field is generated in the fuel transport pipe 1b extending through the structure, fuel passes here, a cluster of hydrogen carbide molecules in the fuel becomes small by a function of the magnetic field, further the fuel is ionized, and the direction of the polarity can be formed to be constant. Consequently, the fuel easily evaporates and burns, and a burning efficiency is enhanced. It is to be noted that when ceramic or the like having a far infrared effect is held in a space between two types of metal plates, in addition to the above-described effect, fuel molecules and water molecules included in the fuel molecules are further easily finely divided by the far infrared effect, and the burning efficiency is further enhanced. As the energy for the minus ionization of the fuel, it is supposed that not only energy by movement of the fuel but also the electromagnetic wave (including an electromagnetic wave originating from the sun or an electromagnetic wave originating from the cosmos such as cosmic rays) received by the activation apparatus 1 constituted of a plate-like member having a comparatively large surface area are large.

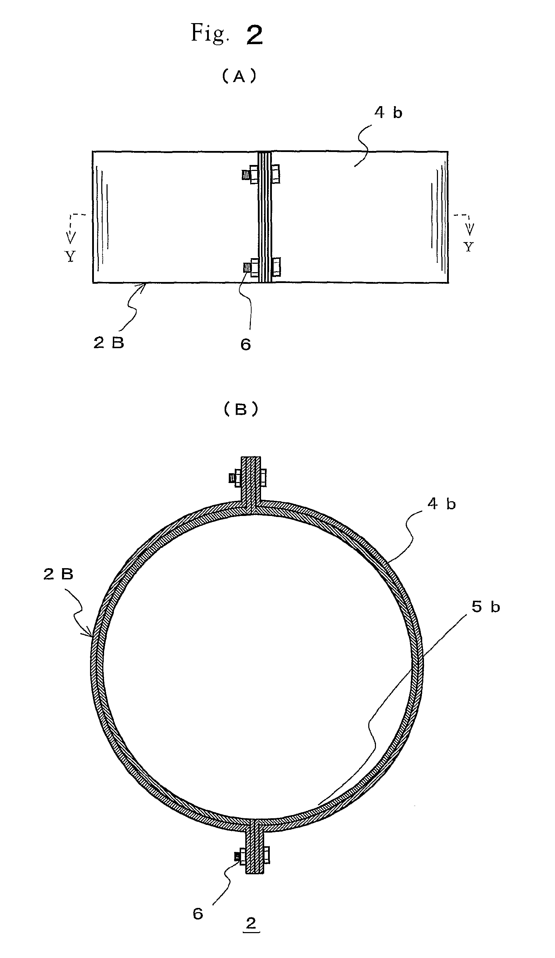

FIG. 2 shows a preferable mode for carrying out the present invention, and shows an activation apparatus 2 attached around a storage can of edible oil for a purpose of preventing oxidization of the oil. FIG. 2A is a front view, and B is a Y-Y line sectional view. Also in the present embodiment, the apparatus is attachable via a plurality of bolts nuts 6 in the same manner as in the object activation apparatus 1 of FIG. 1, and a layered body 2B whose inner diameter is set to 600 mm or more in such a manner as to be attachable to the apparatus is formed into a cylindrical shape, for example, in a case where the apparatus is used in a can having an outer diameter of 600 mm. For example, in the same manner as in FIG. 1, an outer-layer metal plate comprises a metal plate 4b formed of titanium, and an inner-layer metal plate is a metal plate 5b formed of copper. By the stacking structure, in the same manner as described above, a cluster of hydrogen carbide molecules is miniaturized, edible oil is minus-ionized by a potential difference by the activation apparatus 2, the oxidized and degraded edible oil is refined, viscosity is lowered, and the oil is not easily oxidized. It is to be noted that the constitution of the metal of the activation apparatus 2 may be changed to thereby generate a plus potential, and oil molecules can aggregate. As an application example, when the potential is adjusted, a foodstuff disposed in a fluid is solidified. Alternatively, oxidation is promoted to thereby age the foodstuff, and flavor can be adjusted. Furthermore, the activation apparatus 2 is formed into a ring shape having a predetermined size to thereby constitute a bracelet, ring, necklace, or anklet. Then, an improving effect of blood circulation by the magnetic force line effect or a relaxing effect by minus ions can be exerted. It is to be noted that these ornaments are similarly effective not only for people but also in collars for pets.

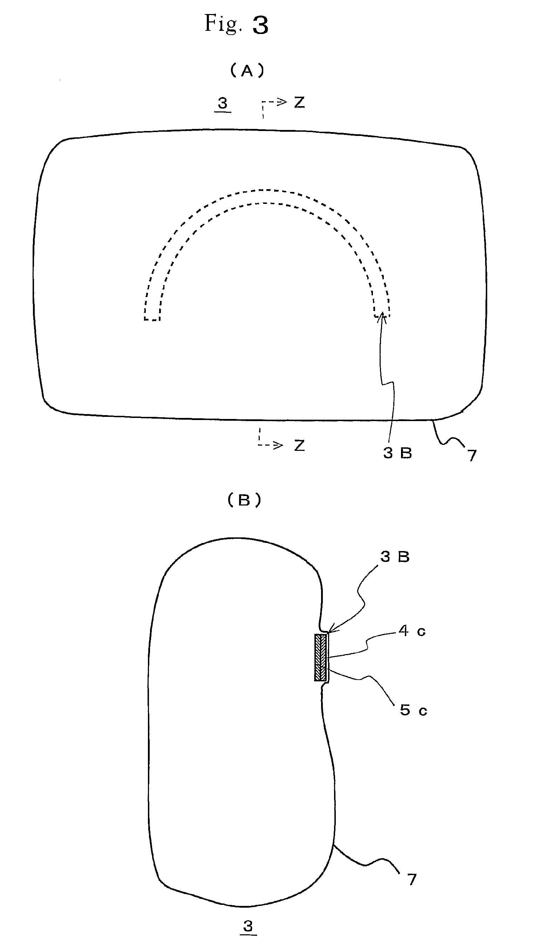

FIG. 3 shows a different preferable embodiment for carrying out the present invention. Unlike the activation apparatus 1 of FIG. 1, an activation apparatus 3 is shown having a plate-like member 3B in which a rein plate 4c kneaded with titanium powder is brought into close contact with a rein plate 5c kneaded with copper powder, and stacked. FIG. A is a front view, and FIG. B is a Z-Z line sectional view. The activation apparatus 3 is different from the activation apparatuses 1, 2 in constitution, and the flat arched stacked member 3B is disposed in such a manner as to surround a portion contacting a head part of a pillow cover part 7. It is to be noted that the resin plates 4c, 5c have conductivity. In the activation apparatus 3, unlike the above-described stacked member, resin plates constituted by kneading a metal powder material into a soft resin are superimposed to thereby form the stacked member 3B. Therefore, the apparatus does not give any discomfort to the head during use. When this apparatus is attached in such a manner as to surround a pillow portion contacting the head, minus ions are generated during sleeping, and a relaxing effect can be expected. Moreover, blood circulation of the head is improved by a magnetic field concentrated and generated inside the arch, and a fatigue recovering effect can also be expected. It is to be noted that a similar effect can be obtained, when a metal formed into a sheet shape is attached to a flexible resin plate instead of the resin plate, a similar effect can be obtained.

The present invention will be described in more detail in accordance with examples in which the activation apparatus of the present invention is attached, and an improving effect of fuel consumption of a vehicle is verified.

A fuel activation apparatus similar to the above-described activation apparatus 1 was attached, 1 mm thick titanium and copper metal plates were used for a car, or 2 mm thick metal plates were used for a truck, and a size of the apparatus was adjusted in accordance with sizes of an engine and fuel transport tube. Moreover, average fuel consumption for two months in a case where the apparatuses were attached to 4 t and 10 t diesel trucks, and 1800 cc gasoline engine car, and average fuel consumption for two months in a case where any apparatus was not attached were checked and compared.

As a result, fuel saving of 10% to 35%, about 15% on average was recognized in the vehicle to which the apparatus was attached with respect to the same vehicle to which the apparatus was not attached. Additionally, decrease of exhaust gas and decrease of black smoke of a diesel car could be confirmed. It is to be noted that the best constitution for carrying out the present invention has been described above, but the present invention is not limited to this constitution.

As seen from the above description, according to the activation apparatus of the present invention, objects such as water, oil and air, further human bodies can be efficiently activated by a light-weight and simple constitution without requiring any new energy source.

## Claims

1. An activation apparatus wherein two or more metals or materials mainly containing metals, having different standard electrode potentials, are mutually stacked to thereby generate electric charges, and electromagnetic waves are generated by a potential difference between the stacked metals or materials.

2. The activation apparatus according to claim 1, wherein at least one of the two or more types of metals is grained.

3. The activation apparatus according to claim 1, wherein at least one of mineral or ceramic, or sludge of mineral or ceramic or metal is held between the two or more types of metals.

4. The activation apparatus according to claim 2, wherein at least one of mineral or ceramic, or sludge of mineral or ceramic or metal is held between the two or more types of metals.

5. The activation apparatus according to claim 1, 2, 3, or 4, wherein the stacked member has a plate, band, or sheet shape.

6. The activation apparatus according to claim 1, 2, 3, or 4, wherein the stacked member has an arch or tubular shape.

7. The activation apparatus according to claim 1, 2, 3, or 4, wherein a reflecting member which reflects the electromagnetic wave is disposed on at least one surface of the stacked member, and the generated electromagnetic wave is concentrated on a center.

8. The activation apparatus according to claim 5, wherein a reflecting member which reflects the electromagnetic wave is disposed on at least one surface of the stacked member, and the generated electromagnetic wave is concentrated on a center.

9. The activation apparatus according to claim 6, wherein a reflecting member which reflects the electromagnetic wave is disposed on at least one surface of the stacked member, and the generated electromagnetic wave is concentrated on a center.
